# EUROPEAN PATENT SPECIFICATION

(11) **EP 3 411 176 B1**
(45) Date of publication and mention of the grant of the patent: **11.10.2023**
(21) Application number: 17701891.8
(22) Date of filing: 30.01.2017
(51) Int. Cl.: B23K 9/095, B23K 9/127, B23K 26/03, B23K 26/044, B23K 31/12, B25J 9/16

(54) **WELDING APPARATUS**
SCHWEISSGERÄT
APPAREIL DE SOUDAGE

(30) Priority: 01.02.2016 IT UB20160255
(43) Date of publication of application: 12.12.2018
(73) Proprietor: Nuovo Pignone Tecnologie - S.r.l., 50127 Florence (IT)
(72) Inventor: MAGNASCO, Marco, 54100 Massa (IT); MILAZZO, Mario, 04010 Latina (IT); CAVALLOTTI, Carmela, 56017 Pisa (IT); INGLESE, Francesco, 83035 Avellino (IT); LEONI, Fabio, 57014 Livorno (IT); CHIARI, Francescosaverio, 50127 Florence (IT); ROCCELLA, Stefano, 57126 Livorno (IT); STEFANINI, Cesare, 56021 Pisa (IT); RAMACCIOTTI, Marco, 55016 Lucca (IT)
(74) Representative: Novagraaf Group
(86) International application number: PCT/EP2017/051949
(87) International publication number: WO 2017/134015

(56) References cited:
- WO-A1-03/086695
- WO-A1-2014/088994
- GB-A- 2 506 914
- JP-A- 2000 176 675
- US-A- 4 649 426
- US-A1- 2006 049 153
- US-A1- 2006 285 330
- US-A1- 2013 119 033

## Description

The subject matter of the present disclosure relates to a welding apparatus (see, for example, JP2000176675A, on which the preamble of claim 1 is based), namely, a set of tools that is used to perform a welding operation for example, but not exclusively, an arc welding operation. Also, the apparatus may be configured to perform a brazing operation.

In the state of the art, it is known to perform welding operations manually. Therefore, a welder is provided with a welding mask and a welding tool. The welding tool comprises a welding torch. During welding operations, an electric arc develops between the welding torch and the welding area.

In a first type of arc welding, the SMAW (Shielded Metal Arc Welding), the electrode itself melts due to the heat developed by the electric arc, thus becoming the filler material of the weld. In a second type of arc welding, the GTAW (Gas Tungsten Arc Welding), the electrode is solid, and the filler material is fed separately. In a third type of arc welding, the GMAW (Gas Metal Arc Welding), sometimes referred to by its subtypes metal inert gas (MIG) welding or metal active gas (MAG) welding, is a welding process in which an electric arc forms between a consumable wire electrode and the workpiece metal(s), which heats the workpiece metal(s), causing them to melt, and join.

Brazing is a metal-joining process in which two or more metal items are joined together by melting and flowing a filler metal into the joint, the filler metal having a lower melting point than the adjoining metal.

Brazing differs from welding in that it does not involve melting the work pieces and from soldering in using higher temperatures for a similar process, while also requiring much more closely fitted parts than soldering. The filler metal flows into the gap between close-fitting parts by capillary action.

Furthermore, in the state of the art it is known to provide a welding kit in order to aid the welder while performing the welding. The kit comprises a set of sensors which can detect the main operating parameters of a welding process, namely the voltage (V), the current (A), the welding speed (S) and their combination to calculate the heat input. The welding mask can be provided with a display device so that these parameters can be shown to a welder, thereby providing him with a possibility of correcting the welding in real time. An example of this welding mask is the one shown in the document US 6242711 B1.

Disadvantageously the above described kit is still an aid for a manual welding operation, therefore the welder is required to be in proximity to the workpiece while the welding is taking place. This requires taking several precautions to ensure the safety of the welder. Nevertheless, accidents can still happen during which the welder is put in an unacceptable danger.

In order to overcome the above disadvantages, it is also known to perform welding operations robotically. In this case, a robotic arm is provided with a welding torch. The system is pre-programmed for the welding operation to perform and can then run without the welder being physically present while the welding takes place.

An example of such apparatus is shown in the document US 6 376 801 B1. This document describes the refurbishing and/or repairing operation of a gas turbine component via an arc welding process. This process is performed using a 6-axis robot, a camera and a robot controller/vision processor. With more detail, the vision system identifies the part, constructs a weld path based on the part's individual contour, and calculates a trajectory (with or without sinusoidal oscillation) for the robot arm to follow.

Disadvantageously, such system maynot be enough flexible to be effectively applied to a wide range of components geometries, such as for example a turbine blade. In addition to this, the program has to follow the programmed path once it has started, and it is unable to react to unexpected situations, thus making it useful only for workpieces that arc compliant with very strict dimensional and geometrical tolerances.

Also, document CN 101 745 765 A describes a man-machine collaboration shared control remote welding method. Such method comprises the following steps: firstly, a macroscopic zooming camera arranged on a tripod in front of the object to be welded acquires a two-dimensional video image, and the visual field of an operator is adjusted in a central monitoring man-machine interface. Afterwards, a robot guides a welding torch to reach the upper part of the weld seam. The operator tracks the weld seam, then a workpiece is fixed on a working platform to form the welding environment at the remote end. The robot moves towards an initial point of the weld seam. During the welding, the torch ensures that arc-length distance parameters of the workpiece are set by the central monitoring man-machine interface. The operator sets a shared control algorithm through the central monitoring man-machine interface.

The method in this document tries to overcome the above mentioned drawbacks, but it still relies on pre-programmed routines for part of its functioning, thereby failing to fully solve the drawbacks of the already known robotic welding machines.

### SUMMARY

The present invention is defined in the accompanying claims.

A first embodiment of the invention therefore relates to a welding apparatus. Such welding apparatus comprises a multi-axis robotic arm having a first end. A welding tool is attached to the first end.

An image acquisition device is also attached to the first end. The image acquisition device is configured to monitor a welding target and to provide an image of the welding target to an operator. The image acquisition device has a light filtering system.

The welding apparatus also comprises a control unit that is configured to control the robotic arm and the welding tool.

The welding apparatus also comprises an input interface for a human operator. The input interface is associated with the control unit and is configured to provide an input signal to the control unit. The input interface is also configured and to control the arm and the welding tool substantially in real time. In particular, the input interface is configured to control the welding parameters, like for example welding current, wire electrode extension, welding voltage and arc travel speed.

Advantageously, the above described embodiment makes it possible to perform substantially any kind of welding operation remotely by giving the welder enough feedback on the welding operation so that he can perform it as if he were present on the same location. Indeed, this apparatus allows to take full advantage of the previous working experience of the welder while considerably improving his safety.

Further details and specific embodiments will refer to the attached drawings, in which:
- Figure 1 is a schematic overview of a welding apparatus according to an embodiment of the present invention;
- Figure 2 is a side view of a component of the apparatus of figure 1;
- Figure 3 is a detail perspective view of the component of figure 2;
- Figure 4 is a schematic view of a detail of figure 3; and
- Figure 5 is a schematic view representing the functioning of the welding apparatus of figures 1-4.

### DETAILED DESCRIPTION

The following description of exemplary embodiments refer to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

With reference to the attached drawings, with the number 1 is indicated a welding apparatus according to an embodiment of the present invention. It is to be noted that the welding apparatus 1 is designed to be tele-operated, however it is not required to be so. This will be better explained in a following part of the present disclosure.

The welding apparatus 1 comprises a multi-axis system, for example the robotic arm 2. The multi-axis robotic arm 2 has a first end 2a and a second end 2b. In particular, the second end is fixed, for example on the ground or on a supporting structure, while the first end 2a can be moved with respect to the second end 2b in order to perform the welding process.

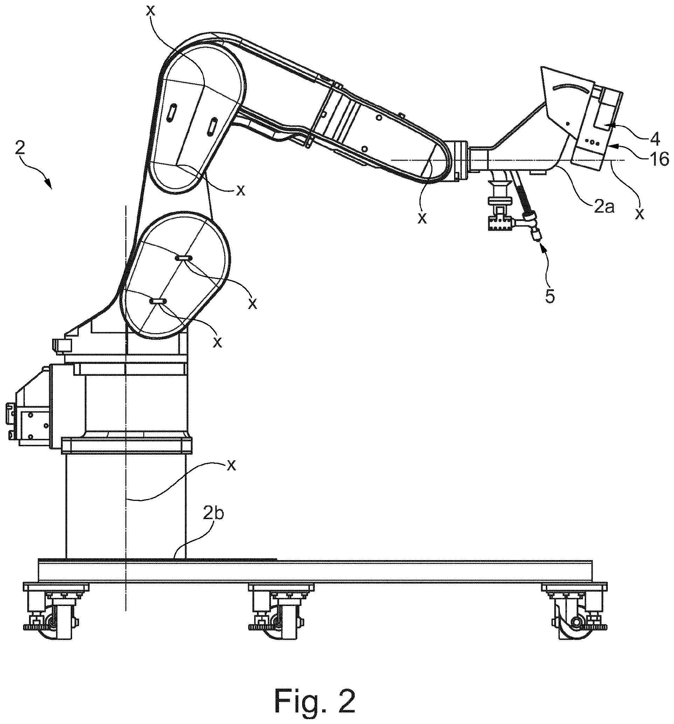

As can be seen in figure 2, in the preferred embodiment the robotic arm 2 has six degrees of freedom. Each degree of freedom is implemented as a rotation according to a respective rotation axis "X". The robotic arm 2 itself should preferably be rated to withstand the high temperature and electromagnetic fields that are present in a welding environment.

According to another requirement, the robotic arm 2 should be able to support the weight and the dynamics of the welding equipment which is installed on the first end 2a. Such welding equipment will be discussed in detail in a following part of the present disclosure.

A welding tool 5 is attached to the first end 2a of the robotic arm 2. The welding tool 5 can be a GTAW welding torch. Alternatively, the welding tool 5 can be a GMAW welding torch. Alternatively, the welding tool 5 can be a SMAW welding handle. Alternatively, the welding tool 5 can be a brazing handle. All of these implementations of the welding tool 5 are by themselves known, and will not therefore be described in detail.

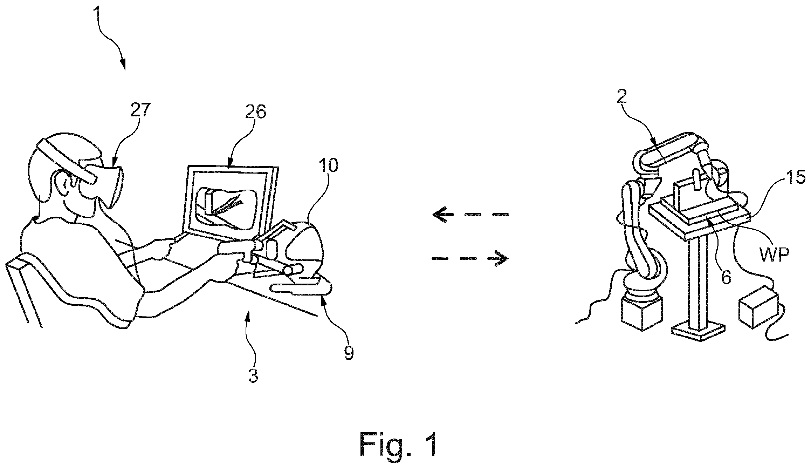

The welding apparatus also comprises a human-machine interface 3, which allows the welder to interact with the apparatus and to pre-program the apparatus with welding parameters. For this purpose, and to allow the welder to monitor the process remotely, the human-machine interface 3 may comprise a screen 26 and/or a 3d visor 27, as schematically represented in figure 1.

The welding apparatus 1 also comprises a control unit 8, which is configured to control at least the robotic arm 2 and the welding torch 5. Furthermore, the control unit 8 is configured to interact with the welder through the human-machine interface 3. Indeed, part of the logic of the control unit 3 may be physically implemented in the human-machine interface 3. With more detail, the control unit 8 is preferably able to control all of the devices installed on the welding apparatus 1 in a manner which will be further clarified in a following part of the present disclosure.

The welding apparatus 1 may also comprise a platform 15 for holding a work piece "WP" to be welded. This platform can either hold the work piece "WP" stationary or move it as needed. In this case, the platform 15 is configured to move the work piece "W" with respect to the welding torch 5. Furthermore, in this embodiment the robotic arm 2 can have any number of degrees of freedom. The exact number of degrees of freedom of the robotic arm 2 will be correlated to the mobility of the platform 15, and will depend on the specific implementation.

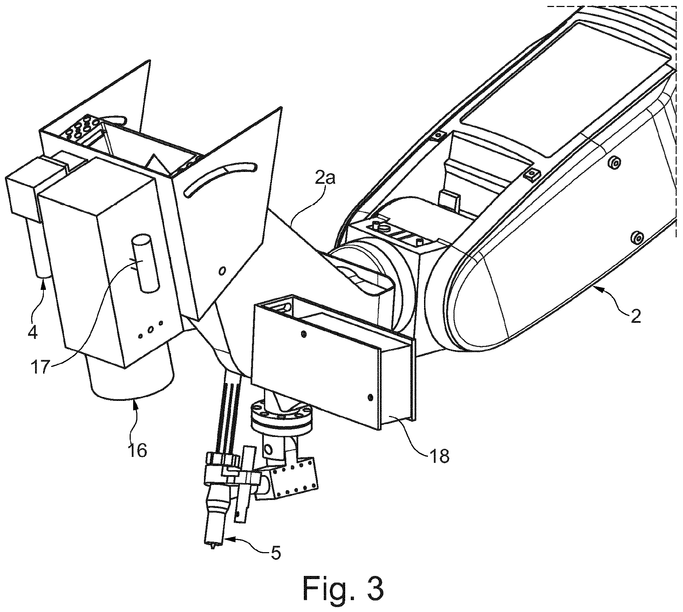

As shown for example in figures 2 and 3, an image acquisition device 4 is also attached to the first end 2a of the robotic arm 2. The image acquisition device 4 can be for example a camera. The image acquisition device 4 is configured to monitor a welding target 6. Moreover, the image acquisition device 4 is able to provide an image of the welding target 6 to an operator.

The image acquisition device 4 further comprises a light sensor 13, which can be of a known type and will not be described in further detail.

With more detail, the image acquisition device 4 has a light filtering system 7. This light filtering system 7 can be active. The light filtering system 7 is placed in front of the light sensor 13, in order to filter the light coming from the welding environment to the light sensor 13.

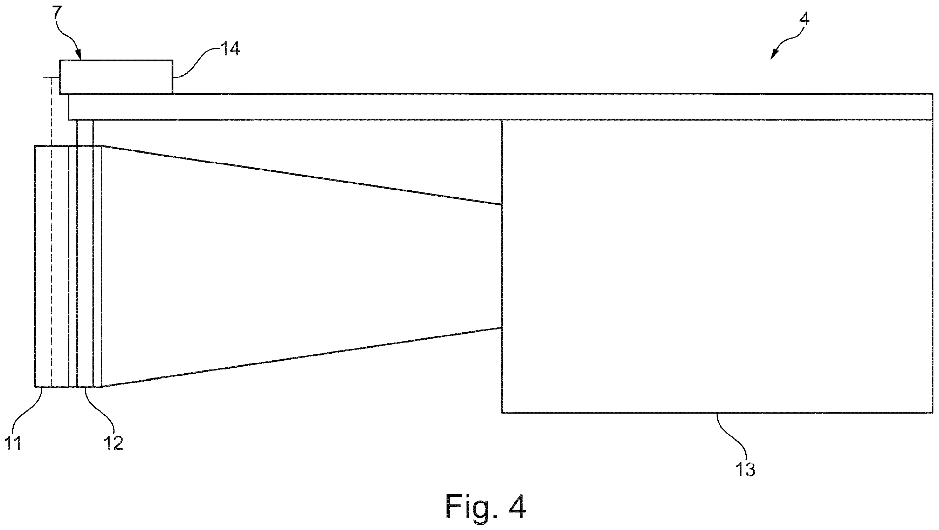

As shown in detail in figure 4, the light filtering system 7 comprises a first 11 and a second polarized lens 12. The active light filtering system 7 can comprise a motor 14 associated to the lenses 11, 12 so that it can change the configuration of the polarized lenses 11, 12 as a function on the light intensity sensed by the light sensor 13. Indeed, the motor 14 can rotate one lens 11, 12 with respect to the other on their common optical axis as function of the light intensity sensed. The light sensor 13 can be optically aligned with the lenses 11, 12 and positioned behind the light filtering system 7, so that it receives the light passing through both lenses, or arranged externally with respect to the image acquisition device 4.

In detail, light entering the image acquisition device 4 enters through the first polarized lens 11, which gives it a preferred polarization. The light then crosses through the second lens 12. If the polarization axis of the lenses 11, 12 are aligned, the lenses 11, 12 light transit is allowed. If the polarization axis of the lenses 11, 12 are perpendicular, light transit is blocked. Therefore, the light filtering system 7 can be set to modulate the amount of light transit in a much simpler way than a mechanical diaphragm. Advantageously, this allow to employ the image acquisition device 4 both when the welding tool 5 is operating, thus emitting a considerable amount of light, and when it is not.

In an alternative embodiment, the image acquisition device 4 can be a high-dynamic-range camera. A high-dynamic-range camera is a well-known type of camera, capable to actively refine the intensity of various wavelengths of light, which can be easily adapted and used for the scope.

In an alternative embodiment not shown in the drawings, the image acquisition device 4 may comprise two cameras configured to provide a stereoscopic view of the welding target 6. Advantageously, with such embodiment it is possible to reconstruct a tridimensional image of the welding target 6, in order to further aid the operator particularly in the perception of depth. Furthermore, it is also possible to implement an augmented reality system thanks based on such tridimensional image.

The welding apparatus 1 may also comprise a thermal sensor 16 placed on the first end 2a of the robotic arm 2. The thermal sensor 16 is arranged to face the welding target 6, and is configured to provide a temperature field map of the welding target 6. The operator may use such information, for example, to detect the formation of the welding pool as well as to control in real-time the welding speed through thermal field. Preferably, the thermal sensor 16 is a thermal camera, which will not be described in detail because it is already known to the person skilled in the art.

The welding apparatus 1 may also comprise a directional microphone 17, orientable toward the work piece "WP". Such directional microphone 17 can also be placed on the first end 2a of the robotic arm, and is able to provide the operator with an audio feedback of the welding operation. For example, the directional microphone 17 allows to transmit to the welder noises created from the welding and possible mechanical shocks.

The welding apparatus 1 comprises a scanner 18 positioned on the first end 2a of the robotic arm 2. The scanner 18 is arranged so that it is upstream of the welding tool 5 with respect to an advancing welding direction. The scanner 18 is configured to provide substantially in real time a scan of at least part of the above mentioned work piece "WP". The scanner 18 can be either a laser scanner, an optical scanner or any other kind of scanner suitable for this purpose according to the knowledge of the person skilled in the art. Since the laser scanner is by itself known, it will not be described in detail in the present disclosure.

The scanner 18 allows to obtain the profile of the work piece "WP". Indeed, since the scanner 18 moves with the robotic arm 2, the scanner 18 is configured for continuously acquiring the profile of the work piece "WP". The control unit 8 can be configured to provide on the screen 26 of the human-machine interface 3 a real-time image of the shape of the work piece "WP" profile.

As a function of the real-time scan of the work piece "WP", a preferred welding path is calculated through the control unit 8, providing instantaneously a welding direction that in any case can be manually adjusted by the operator.

The welding apparatus 1 also comprises an input interface 9 for a human operator. Preferably, the input interface 9 is positioned remotely with respect to the robotic arm 2.

According to a preferred embodiment of the invention, the input interface 9 comprises a haptic interface 10. According to a further embodiment of the invention, not shown in the drawings, the input interface 9 comprises a joystick.

Advantageously, with the scanner 18 present, the input interface 9 is configured to suggest a preferred welding direction as a function of the acquired profile of the work piece "WP". Specifically, the haptic interface 10 can provide force feedback to the operator so that the operator is directed to proceed along the preferred welding direction. Indeed, the force feedback to the operator as a function of a predetermined set of welding parameters.

The operator however is still free to proceed in a different direction according to his own experience.

Optionally, the input interface 9 is configured to control the welding tool 5 as a function of certain preset parameters. These parameters can be, for example, welding tension and/or welding voltage and/or welding torch speed and/or filler rod speed.

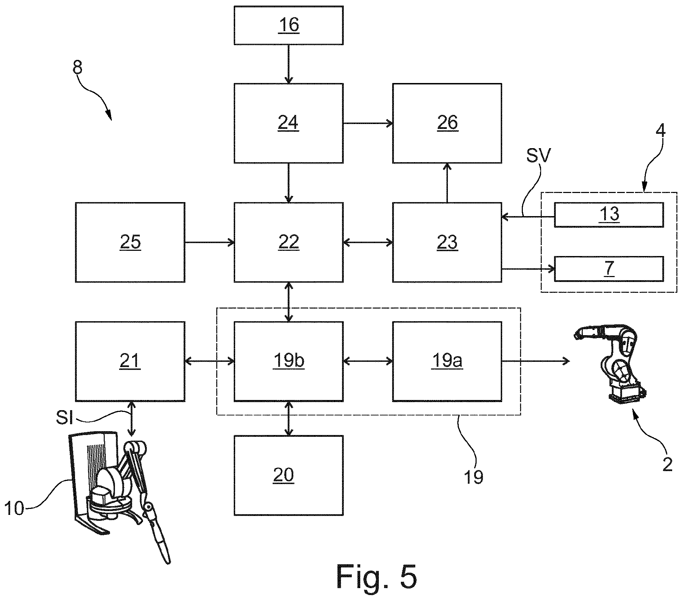

Referring now to figure 5, a possible implementation of the above mentioned control unit 8 will be described in detail.. The control unit 8 will be described as comprising several functional modules. These modules are referred to for ease and completeness of description, but they should not be considered structurally limiting. Indeed, all or part of these modules can be implemented in hardware and/or software. These modules may be part of the same physical device or may be located on different devices communicating among them using either a wired or wireless connection. These modules can interact with each other individually or as par of a network. Indeed, some of these modules may be part of a remote installation and interact with the other modules via Internet or other WAN.

The control unit 8 comprises a control module 19 for the robotic arm 2. This control module 19 comprises a local unit 19a installed on the robotic arm 2, and a remote unit 19b which can be located remotely with respect to the local unit 19a.

The control unit 8 comprise a scanner handling module 20 which is tasked with providing information related to the position of the scanner 18 to the control module 19.

The input interface 9 is associated with the control unit 8, and is configured to provide an input signal "SI" to the control unit 8. Through the input signal "SI" the input interface 9 is able to control the robotic arm 2 substantially in real time. Indeed, the control unit 8 comprises an interface handling module 21 which interacts with the control module 19 for the robotic arm 2.

A welder handling module 22 is configured to interact with the control module 19 of the robotic arm, to exchange information and/or input related to the function of the welding tool 5, also in relation to the position of the robotic arm 2. Through the input signal "SI", the operator is thus able to control the welding tool 5 substantially in real time. Also, a command handling module 25 is present, through which the welder can change the welding parameters in the welder handling module 22 directly and/or control certain functions of the welding apparatus 1, depending on the specific implementation.

The welder handling module 22 interacts with a camera handling module 23, which itself interfaces with the image acquisition device 4. This module handles a video signal "SV" from the image acquisition device 4, which can be redirected for example on the screen 26. The camera handling module 23 also handles the setting of the light filtering system 7, as explained above.

Optionally, the control unit 8 may also comprise a thermal handling module 24. Such thermal handling module 24 acquires data from the thermal sensor 16 and provides this information to the welder handling module 22. Optionally, the thermal handling module 24 may also show a representation of the temperature information to the welder on the screen 26.

A method for performing a welding using the welding apparatus 1 comprises the first step of positioning a work piece "WP" to be welded on the welding target 6. The welding tool 5 and the robotic arm 2 are then controlled by means of the input interface 9 for performing the welding process. The work piece "WP" and the welding target 6 are monitored continuously by the operator at least through the image acquisition device 4.

## Claims

1. Welding apparatus (1) comprising a multi-axis robotic arm (2) having a first end (2a); a welding tool (5) attached to the first end (2a) and a control unit (8) configured to control the robotic arm (2) and the welding tool (5);
the welding apparatus further comprising:
an image acquisition device (4) attached to the first end (2a), having a light filtering system (7), said image acquisition device (4) being configured to monitor a welding target (6) on a workpiece (WP) and to provide an image of said welding target (6) to an operator;
an input interface (9) for a human operator, said input interface (9) being associated to the control unit (8) and configured to provide an input signal (SI) to said control unit (8) and to control the robotic arm (2) and welding tool (5) substantially in real time;
**characterised by**:
a scanner (18) positioned on the first end (2a) of the robotic arm (2) upstream of the welding tool (5) with respect to an advancing welding direction and configured to provide substantially in real time a profile of the workpiece (WP), wherein the input interface (9) is configured to suggest instantaneously a preferred welding direction that in any case can be manually adjusted by the human operator as a function of said scan.

2. Welding apparatus (1) according to claim 1, wherein the input interface (9) comprises a haptic interface (10) or a joystick.

3. Welding apparatus (1) according to claim 1 or claim 2, wherein the input interface (9) is configured to provide a force feedback to the operator as a function of a predetermined set of welding parameters.

4. Welding apparatus (1) according to any of the preceding claims, wherein the light filtering system (7) comprises a set of polarized lenses (11, 12).

5. Welding apparatus (1) according to claim 4, wherein said image acquisition device (4) further comprises a light sensor (13) and a motor (14) for changing the configuration of said polarized lenses (11, 12) as a function on the light intensity sensed by said light sensor (13).

6. Welding apparatus (1) according to any of the preceding claims, also comprising a thermal sensor (16) placed on the first end (2a) of the robotic arm (2), arranged to face said welding target (6) and configured to provide a temperature field map of the welding target (6).

7. Welding apparatus (1) according to any of the preceding claims, wherein the image acquisition device (4) comprises at least two cameras configured to provide a stereoscopic view of the welding target (6).

8. Welding apparatus (1) according to any of the preceding claims, also comprising a directional microphone (17) orientable toward the workpiece (WP).

9. Welding apparatus (1) according to any of the preceding claims, wherein the welding tool (5) is a GTAW welding torch or a GMAW welding torch or a SMAW welding handle or a brazing tool.

10. Welding apparatus (1) according to any of the preceding claims, further comprising a platform (15) for holding a work piece, said platform being configured to move the work piece with respect to the welding tool (5).

11. Welding apparatus (1) according to any of the preceding claims, wherein the input interface (9) is configured to control the welding tool (5) as a function of welding tension and/or welding voltage and/or welding torch speed and/or filler rod speed.

12. Method for performing a welding operation using a welding apparatus (1) according to any one of the previous claims, the method comprising the steps of positioning a work piece (WP) to be welded on the welding target (6); controlling the welding tool (5) and the robotic arm (2) by means of the input interface (9) to weld the work piece (WP); monitoring the work piece (WP) and the welding target (6) through the image acquisition device (4).

13. Method according to claim 12, wherein the work piece (WP) is a turbomachine component.

## Patentansprüche

1. Schweißeinrichtung (1), umfassend einen mehrachsigen Roboterarm (2), der ein erstes Ende (2a) aufweist; ein Schweißwerkzeug (5), das an dem ersten Ende (2a) angebracht ist, und eine Steuereinheit (8), die konfiguriert ist, um den Roboterarm (2) und das Schweißwerkzeug (5) zu steuern;
die Schweißeinrichtung ferner umfassend:
eine Bildaufnahmevorrichtung (4), die an dem ersten Ende (2a) angebracht ist, wobei sie ein Lichtfiltersystem (7) aufweist, wobei die Bildaufnahmevorrichtung (4) konfiguriert ist, um ein Schweißziel (6) auf einem Werkstück (WP) zu überwachen und ein Bild des Schweißziels (6) an einen Bediener bereitzustellen;
eine Eingabeschnittstelle (9) für einen menschlichen Bediener, wobei die Eingabeschnittstelle (9) der Steuereinheit (8) zugeordnet und konfiguriert ist, um ein Eingabesignal (SI) an die Steuereinheit (8) bereitzustellen und den Roboterarm (2) und das Schweißwerkzeug (5) im Wesentlichen in Echtzeit zu steuern;
**gekennzeichnet durch:**
einen Scanner (18), der an dem ersten Ende (2a) des Roboterarms (2) stromaufwärts des Schweißwerkzeugs (5) hinsichtlich einer fortlaufenden Schweißrichtung positioniert und konfiguriert ist, um ein Profil des Werkstücks (WP) im Wesentlichen in Echtzeit bereitzustellen, wobei die Eingabeschnittstelle (9) konfiguriert ist, um eine bevorzugte Schweißrichtung augenblicklich vorzuschlagen, die in jedem Fall durch den menschlichen Bediener in Abhängigkeit von dem Scan manuell eingestellt werden kann.

2. Schweißeinrichtung (1) nach Anspruch 1, wobei die Eingabeschnittstelle (9) eine haptische Schnittstelle (10) oder einen Joystick umfasst.

3. Schweißeinrichtung (1) nach Anspruch 1 oder 2, wobei die Eingabeschnittstelle (9) konfiguriert ist, um eine Kraftrückkopplung in Abhängigkeit von einem zuvor bestimmten Satz von Schweißparametern an den Bediener bereitzustellen.

4. Schweißeinrichtung (1) nach einem der vorstehenden Ansprüche, wobei das Lichtfiltersystem (7) einen Satz polarisierter Linsen (11, 12) umfasst.

5. Schweißeinrichtung (1) nach Anspruch 4, wobei die Bildaufnahmevorrichtung (4) ferner einen Lichtsensor (13) und einen Motor (14) zum Ändern der Konfiguration der polarisierten Linsen (11, 12) in Abhängigkeit von der Lichtintensität, die durch den Lichtsensor (13) erfasst wird, umfasst.

6. Schweißeinrichtung (1) nach einem der vorstehenden Ansprüche, ebenso umfassend einen Wärmesensor (16), der an dem ersten Ende (2a) des Roboterarms (2) platziert ist, angeordnet, um dem Schweißziel (6) zugewandt zu sein, und konfiguriert, um eine Temperaturfeldkarte des Schweißziels (6) bereitzustellen.

7. Schweißeinrichtung (1) nach einem der vorstehenden Ansprüche, wobei die Bildaufnahmevorrichtung (4) mindestens zwei Kameras umfasst, die konfiguriert sind, um eine stereoskopische Ansicht des Schweißziels (6) bereitzustellen.

8. Schweißeinrichtung (1) nach einem der vorstehenden Ansprüche, ebenso umfassend ein Richtmikrofon (17), das zu dem Werkstück (WP) hin ausrichtbar ist.

9. Schweißeinrichtung (1) nach einem der vorstehenden Ansprüche, wobei das Schweißwerkzeug (5) ein WIG-Schweißbrenner oder ein MIG-Schweißbrenner oder ein SMAW-Schweißgriff oder ein Lötwerkzeug ist.

10. Schweißeinrichtung (1) nach einem der vorstehenden Ansprüche, ferner umfassend eine Plattform (15) zum Halten eines Werkstücks, wobei die Plattform konfiguriert ist, um das Werkstück hinsichtlich des Schweißwerkzeugs (5) zu bewegen.

11. Schweißeinrichtung (1) nach einem der vorstehenden Ansprüche, wobei die Eingabeschnittstelle (9) konfiguriert ist, um das Schweißwerkzeug (5) in Abhängigkeit von Schweißspannung und/oder Schweißpotential und/oder Schweißbrennergeschwindigkeit und/oder Schweißstabgeschwindigkeit zu steuern.

12. Verfahren zum Durchführen eines Schweißvorgangs unter Verwendung einer Schweißeinrichtung (1) nach einem der vorstehenden Ansprüche, das Verfahren umfassend die Schritte Positionieren eines zu schweißenden Werkstücks (WP) auf dem Schweißziel (6); Steuern des Schweißwerkzeugs (5) und des Roboterarms (2) mittels der Eingabeschnittstelle (9), um das Werkstück (WP) zu schweißen; Überwachen des Werkstücks (WP) und des Schweißziels (6) durch die Bildaufnahmevorrichtung (4).

13. Verfahren nach Anspruch 12, wobei das Werkstück (WP) eine Turbomaschinenkomponente ist.

## Revendications

1. Appareil de soudage (1) comprenant un bras robotique à axes multiples (2) ayant une première extrémité (2a) ; un outil de soudage (5) fixé à la première extrémité (2a) et une unité de commande (8) configurée pour commander le bras robotique (2) et l'outil de soudage (5) ;
l'appareil de soudage comprenant en outre :
un dispositif d'acquisition d'image (4) fixé à la première extrémité (2a), ayant un système de filtrage de lumière (7), ledit dispositif d'acquisition d'image (4) étant configuré pour surveiller une cible de soudage (6) sur une pièce à usiner (WP) et pour fournir une image de ladite cible de soudage (6) à un opérateur ;
une interface d'entrée (9) pour un opérateur humain, ladite interface d'entrée (9) étant associée à l'unité de commande (8) et configurée pour fournir un signal d'entrée (SI) à ladite unité de commande (8) et pour commander le bras robotique (2) et l'outil de soudage (5) sensiblement en temps réel ;
**caractérisé par** :
un dispositif de balayage (18) positionné sur la première extrémité (2a) du bras robotique (2) en amont de l'outil de soudage (5) par rapport à une direction de soudage de progression et configuré pour fournir sensiblement en temps réel un profil de la pièce à usiner (WP), dans lequel l'interface d'entrée (9) est configurée pour suggérer instantanément une direction de soudage préférée qui dans tous les cas peut être ajustée manuellement par l'opérateur humain en fonction dudit balayage.

2. Appareil de soudage (1) selon la revendication 1, dans lequel l'interface d'entrée (9) comprend une interface haptique (10) ou une manette.

3. Appareil de soudage (1) selon la revendication 1 ou la revendication 2, dans lequel l'interface d'entrée (9) est configurée pour fournir un retour de force à l'opérateur en fonction d'un ensemble prédéterminé de paramètres de soudage.

4. Appareil de soudage (1) selon l'une quelconque des revendications précédentes, dans lequel le système de filtrage de lumière (7) comprend un ensemble de lentilles polarisées (11, 12).

5. Appareil de soudage (1) selon la revendication 4, dans lequel ledit dispositif d'acquisition d'image (4) comprend en outre un capteur de lumière (13) et un moteur (14) pour changer la configuration desdites lentilles polarisées (11, 12) en fonction de l'intensité de lumière détectée par ledit capteur de lumière (13).

6. Appareil de soudage (1) selon l'une quelconque des revendications précédentes, comprenant également un capteur thermique (16) placé sur la première extrémité (2a) du bras robotique (2), agencé pour faire face à ladite cible de soudage (6) et configuré pour fournir une carte de champ de température de la cible de soudage (6).

7. Appareil de soudage (1) selon l'une quelconque des revendications précédentes, dans lequel le dispositif d'acquisition d'image (4) comprend au moins deux caméras configurées pour fournir une vue stéréoscopique de la cible de soudage (6).

8. Appareil de soudage (1) selon l'une quelconque des revendications précédentes, comprenant également un microphone directionnel (17) orientable vers la pièce à usiner (WP).

9. Appareil de soudage (1) selon l'une quelconque des revendications précédentes, dans lequel l'outil de soudage (5) est une torche de soudage GTAW ou une torche de soudage GMAW ou une poignée de soudage SMAW ou un outil de brasage.

10. Appareil de soudage (1) selon l'une quelconque des revendications précédentes, comprenant en outre une plateforme (15) pour maintenir une pièce à usiner, ladite plateforme étant configurée pour déplacer la pièce à usiner par rapport à l'outil de soudage (5).

11. Appareil de soudage (1) selon l'une quelconque des revendications précédentes, dans lequel l'interface d'entrée (9) est configurée pour commander l'outil de soudage (5) en fonction de la contrainte de soudage et/ou de la tension de soudage et/ou de la vitesse de torche de soudage et/ou de la vitesse de baguette d'apport.

12. Procédé destiné à la réalisation d'une opération de soudage à l'aide d'un appareil de soudage (1) selon l'une quelconque des revendications précédentes, le procédé comprenant les étapes consistant à positionner une pièce à usiner (WP) à souder sur la cible de soudage (6) ; commander l'outil de soudage (5) et le bras robotique (2) au moyen de l'interface d'entrée (9) pour souder la pièce à usiner (WP) ; surveiller la pièce à usiner (WP) et la cible de soudage (6) à travers le dispositif d'acquisition d'image (4).

13. Procédé selon la revendication 12, dans lequel la pièce à usiner (WP) est un composant de turbomachine.
